# EUROPEAN PATENT APPLICATION

(11) **EP 1 757 340 A1**
(43) Date of publication of application: **28.02.2007**
(21) Application number: 05291766.3
(22) Date of filing: 23.08.2005
(51) Int. Cl.: A63F 13/00, A63F 13/02

(54) **An authenticating personal token implementing a role-playing game**

(71) Applicant: Axalto S.A., 92120 Montrouge (FR)
(72) Inventor: Contamin, Bruno c/o Axalto S.A. IP Dept., 92120 Montrouge (FR)
(74) Representative: Cour, Pierre

(57) **Abstract**

The invention relates to a personal authenticating token characterized in that it comprises a set of instructions for controlling the microprocessor into displaying a set of text sections (10, 20, 30) to the user which set of text sections is prestored in the card and into acquiring data from the user as responses to at least some of the set of sections, characterized in the set of sections constitutes a roleplaying game prestored in the card.

## Description

The invention relates to game books and electronics.

Gamebooks are sometimes referred to as choose-your-own adventures or roleplaying games. A game book consists in a set of text sections at the end of each section the reader is given options and choices. The reader goes from section to section depending on the choices he makes. The decisions of the user therefore determine the script of the adventure and in particular the nature of the result of the adventure.

Implementation of such gamebooks on electronic devices is not something new. You can refer to the Patent US6106399 "Internet Audio Multi-User Roleplaying Game" which is giving a good historical picture of how the concept of gamebook is born. These gamebooks have already been implemented in some electronic forms where some game book can be read through Internet. On some more advanced computer games, they incorporate some sounds effects like the very successful Monkey Island game published by LucasArts Entertainment Company.

Besides this, some games implemented on Sim cards already exist. There are generally simple games. Also, some games exist where the user tries to guess some words or tries to guess some numbers.

Some solutions to display some situations where the reader is the hero on a mobile already exist as described in patent GB2355627B "Interactive voice, wireless game system using predictive command input".

But in order to implement this game, the solution chosen is to get the data which describes a virtual word from a distant server: this solution is very unpractical since it requires implementing the game interface on the server and on the mobile. The invention aims at providing a simpler solution which has a lower cost and which doesn't require the user to buy a new mobile or to install a specific software on his mobile.

The solution provided thanks to the invention is the one recited in the appended claims.

Other aspects, aims and benefits of the invention will appear through the following description which refers to the appended claims, among which:
- figure 1 schematically depicts a part of a role-playing game according to the invention,
- figure 2 depicts a typical text section structure according to the invention.

This hereafter described embodiment of the invention relies on an application that can be implemented on a smart card comprising a microprocessor unit and some data storage memory area which smart card can be connected with a mobile phone. On the smart card as well as on the phone, a protocol or part of a protocol following the specifications 11.11 and 11.14 or equivalent is implemented, which allows an application inside the smart card to be able to send at least the following commands to the mobile.

The "Display text" command is a command, which indicates that the mobile should display a message to the user through the displaying means of the mobile phone. This message has a length limited by the said protocol. The user uses the phone keypad in order to specify that he has finished the reading, or that he wants to cancel the operation, the said protocol requires the mobile to return this user input to the card through a "Terminal response" command.

The "Select Item" is a command, which indicates that the mobile should display a menu consisting of a multiple choice between several text strings to the end user. The user selects one of the text strings thanks to the keypad, and the information of the user choice is returned to the sim card application thanks to the "Terminal response" command.

Also, the man of the art knows very well how to generate some random number in a smart card application, and how to make some basic calculations or data processing in this application.

The gamebook consists in sections of text, each section being a small part of a much longer story. Each section of text is numbered, so that it is very easy for the reader, given a section number, to search for it inside of the book. In theses books, the reader usually stands for the hero, and so, at the end of each section a choice is given to the reader (usually between 2 or 3 possibilities).

This allows the reader to decide what action the hero is going to do, knowing the situation exposed in the section of text just read. According to his choice, a section number is given to the reader, which corresponds to the section of text, which contains the next fragment of story, at the end of which a new choice will be presented to him...

In most of these books, the hero has some physical or mental characteristics, and can carry some objects. At the end of a given section, these characteristics or the objects carried may decide of what following section the reader will be directed to. Some random number given by a dice for example can be used or can be combined with the object characteristics or hero characteristics in order to decide to what following section the reader will be directed to.

The sections of text are divided into blocks of a size inferior to the maximum size supported by the said display text command. Following the ETSI 11.14, the blocks can contain up to 250 characters. These blocks are displayed to the reader one after the other through the display text command. This way, the user can read the text contained in the given section at his own pace. At the end of some section, the choice is given to the user thanks to the "Select Item" command. This command displays several text strings to the user, each of the string describing one choice for the user. The text strings have to be chosen so that the cumulated length of the strings is smaller than the maximum text size supported by the command.

According to the text chosen, the mobile will return a "Terminal response" command, according to the ETSI 11.14 specification. This Get Response contains the information of which item has been chosen by the reader. This way, the application knows which option has been chosen and can display the following section accordingly.

At the end of some section, some random event can occur. For example, the story can happen in a battle field where the hero, if he is lucky will not receive any bullet, and if he is unlucky, will be wounded by a bullet. In this case, at the end of the section, the application can draw a random number. If the random number if below a value set in advance, a first section of story will be displayed. If the random number goes above or is equal to the said given value, another section will be displayed.

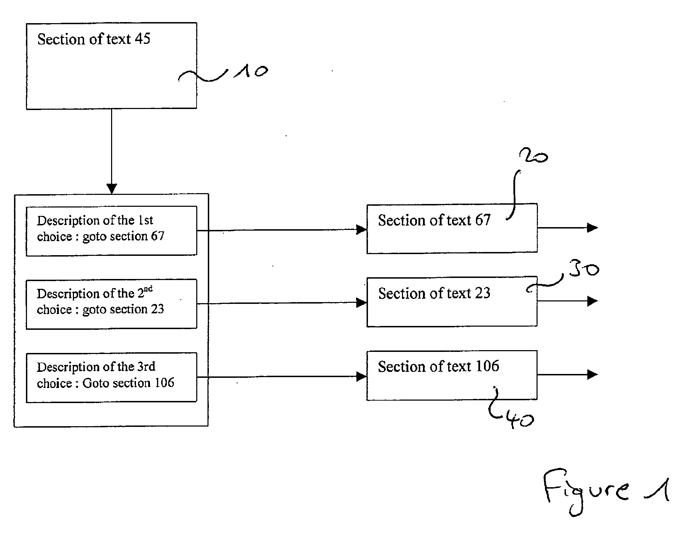

Figure 1 represents a fragment of a gamebook of the prior art. In this book, the current section 10, i.e. the 45^{th} section of text in the present situation, relates to a portion of the story. At the end of this section, a situation is described where three options are left to the reader. If the reader chooses the first option, then he is asked to find the 67^{th} section of the adventure book, carrying reference 20 on the figure. If the reader chooses the second option, then he is asked to find the 23^{rd} section of the adventure book, carrying reference 30 on the figure.. If the reader chooses the first option, then he is asked to find the 106^{th} section of the adventure book, carrying reference 40 on the figure. Under section 20, the new situation described takes into account the choice done by the reader. At the end of this section, a new choice will be given to him.

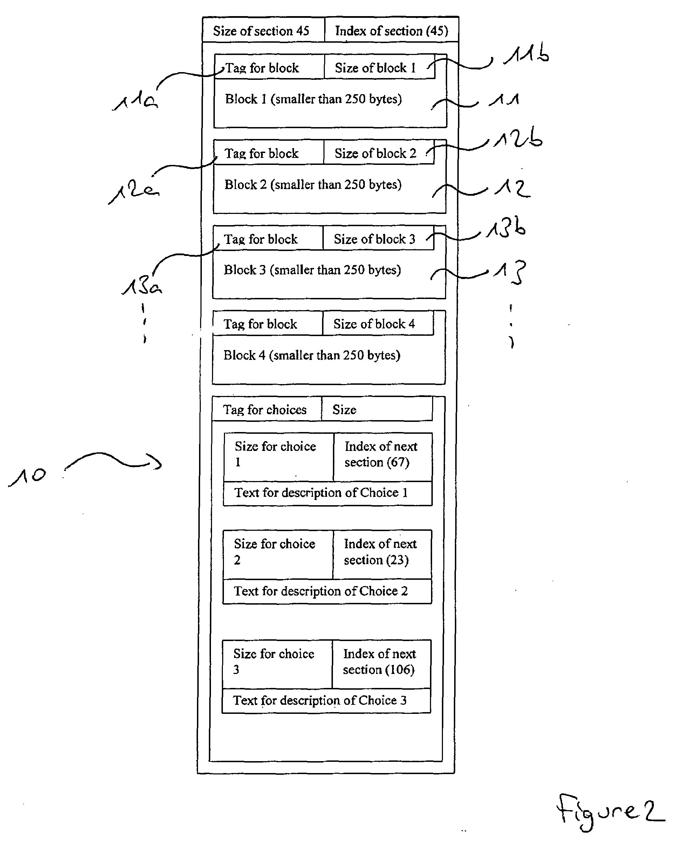

Figure 2 describes the way the 45^{th} section, i.e. current section 10, can be represented in the application of the present invention: The data object representing the current section of the book is a data structure which first element is the size of this data structure and second element is the index identifying the section. This way, the card can store the sections one after the other in the memory, and it is very easy to implement a software which searches for a section in the memory of the card given its identifier. The text of the 45^{th} section is divided in blocks 11, 12, 13 of size smaller than 250. The text of each block is then included in a TLV structure (Tag-Length-Value), where the tag 11a, 12a, 13a is the first element of the structure and indicates to the application what action should be performed with this structure. In this TLV, the length is represented by the second element 11b, 12b, 13b of the structure and allows the application to search for the following TLV structures included in the 45^{th} section. A specific value is chosen for the tag of the blocks that have to be displayed to the user: For example, the value 0x60 is chosen and is the tag for text blocks in all sections. The TLV containing the blocks of text are stored one after the other and are inside the data object representing the section 45.
TLV is an abbreviation for a data structure which contains a tag indicating the nature of the data contained in the said data structure, a length which indicates the size of the data structure in octets, and a value, which is the useful data.

After them, the last TLV of the 45th section is the TLV containing the different choices to be presented to the user. The value of the tag of this TLV is chosen (for example 0x40), and is the same value for all TLV containing choices. Each choice is itself represented by a data structure containing the text string describing the choice, containing also a length element, and containing an index, which corresponds to the next section according to this choice.

Given this data structure, the man of the art knows very well how to write a software program, which is going to read one after the other the TLV inside the section structure and perform the following actions:
If the tag of the TLV is 0x60, then it sends a display text displaying the string of the given TLV. When it gets a "terminal response" command from the mobile, which indicates that the user has acknowledged the message, it reads the next TLV.
If the tag of the TLV is 0x40, then it sends a select item command, containing all the strings of the TLV. When it gets a "terminal response" from the mobile saying which string has been selected, then it searches for the section, which number is given in the choice structure, and it starts treating the following section.

In the case of the current section, i.e. section referenced 10 on the figure, this software program reads the first TLV containing block 11, and sends a display text displaying this first block. Then it waits for the "terminal response" command given by the mobile. When the " terminal response" is received, it reads block 12 and sends a display text command displaying the text of this block. When the corresponding terminal response is received, it displays block 13, and then block 14. Then, it reads the last TLV of section 10, which contains the choices. It sends a select Item command to the mobile, presenting the three text strings representing the 3 choices to be given to the user, and waits for the terminal response. If the terminal response indicates that the first string has been selected, then the software program is going to display section 20, i.e. the 67^{th} section, as indicated in the data structure containing the first choice. If the get response indicates that the second string has been selected, then the program is going to branch to the 23^{rd} section, if it is the third string, the program branches to the 106^{th} section.

The other sections can be represented in similar structure, where the length and the section number are chosen appropriately. The number of blocks inside a section can of course also vary, depending on the total length of the text of the section.

So, a SIM card containing a simple application and enough memory to contain all the sections of a gamebook can easily display this book on any handset.

Also, the advantage of this implementation is that the data containing the text of the book can be changed without changing the application. It can be contained for example in some file or other place in the card independent from the application, and can be changed without changing the application. For example, there are many known solutions to download some data to a card using SMS or other protocol. We can imagine that such a method is used to update or change the book on the card without changing the application. This is useful, since the download of application is more complex than download of simple data, and can cause some security problems such as virus etc..

The data structure presented in figure 2 can be improved in order to include some random event in the story: A TLV with a new tag can be introduced which contains at least the following data elements: the probability that an event occurs, the new section index if this event occurs, and the new section index if it doesn't occur. Then, when the gamebook application reaches this TLV, it draws a random number and according to this number and the given probability, it branches to the appropriate section number.

Sometimes, some event occurs and let the hero acquire some object, like a magic shield for example. A specific TLV for the discovery of objects is implemented as an embodiment. The application can easily store the list of the objects carried by the hero. After, some event in the story can also depend on the possession of this object. For example, if the hero has the magic shield, he cannot be reached by some arrows (we can have some TLV, which marks such event...)

In the book, sometimes the hero sometimes has to fight against some enemies. The reader is then asked to calculate the damage that the fighters do on each other with some specific rule: The hero and the enemy hit each other one after the other. The Hero has a force represented by a force Fh and a life Lh, the enemy a force Fe and a life Le. When the hero hit the enemy, his life is decreased by Fh*Rng....

The formulas to be calculated during the combat are so:
Lh:=Lh-Fe*RNG1
Le:=Le-Fh*RNG2
Lh:=Lh-Fe*RNG3
Le:=Le-Fh*RNG4
Lh:=Lh-Fe*RNG5
Le:=Le-Fh*RNG6
... Until one of them loses his life.

The story line or scenario can be extracted directly from a book or can be written specifically for this application.

Of course, the current version of the standard should not be considered as a limitation. This invention can easily be adopted on 2G, 3G cards, but could be implemented following future or other existing standards.

Usage of the playtone command: Eventually, some command such as playtone (Cf etsi 11.14) can be sent to the phone to add some fun...

Game books have until now given birth to two kind of games: The first kind is the "solo game", where only one user lives an adventure, which scenario is written in a book or implemented with some computer or electronic device. The other kind is the "multiplayer game", where many player interacts in the same virtual world, but which is more complex to implement.

This patent concerns typically the first kind of game.

Thanks to the invention the reader cannot cheat by exploring the different possibilities in advance: the rules of the game are controlled by software, and it is less easy to cheat

Calculation of some random event are done by the software. Calculation of combats are done by software (sometimes, some combats are "simulated", the damages done by the hero's sword are calculated according to many parameters...)

The inventory of objects that the hero carry can be made by software: A specific formatted data area can be designed in order to describe the objects being hold by the hero and the physical characteristics of the hero. This characteristics or list of objects can be updated when some event occurs. In order to do this, a TLV containing the information that a specific object is given to the hero is included into the section data structure. The application updates the data structure describing the hero with this TLV, in order to indicate that the hero has acquired the object.

A data structure is stored in the card, where the set of instructions stores and currently updates at least one information which represents the physical characteristics of the hero. This information is later used for determining the next text section to be displayed to the user after the current section.

The user doesn't need any heavy device such as a PC. He doesn't need any internet access either.

The present embodiment is implemented completely on the smart card, so it makes it independent of the phone owned by the end user. Therefore, no modification of the phone is needed.

The man of the art knows how to implement this application with the java language, using the methods and tools described by the Java Card specification written by SUN and the GSM 3.19 standard. This application can therefore easily be implemented thanks to it's simplicity.

The application doesn't need to communicate with a server: can be played without network.

The operator doesn't need to negotiate with the mobile manufacturer, everything is in the card.

## Claims

1. A personal authenticating token **characterized in that** it comprises a set of instructions for controlling the microprocessor into displaying a set of text sections (10, 20, 30) to the user which set of text sections is prestored in the card and into acquiring data from the user as responses to at least some of the set of sections, **characterized in** the set of sections constitutes a roleplaying game prestored in the card.

2. The personal token according to claim 1, **characterized in that** the personal authenticating token is an authenticating smart card for a telecommunication network.

3. The personal token according to claim 2, **characterized in that** the personal token in an authenticating token for a mobile phone network.

4. The personal token according to claim 1, **characterized in that** the sections of the set of text sections (10, 20, 30) are attributed an index and are stored in a given index order, and the set of instructions initiates a search for a given text section according to its index so as to display the said given text section.

5. The personal token according to claim 1, **characterized in that** the set of instructions initiates a random generation and controls an interpreting operation of the result of the random generation for determining the next text section to be displayed to the user.

6. The personal token according to the preceding claim, **characterized in that** at least some of the text sections (10, 20, 30) are stored with an associated attribute which consists in a probability level, and the set of instructions performs a random generation subsequently to having displayed such text section as a current section, the result of which random generation determines which text section is subsequently displayed in accordance with the probability as associated with the current text section.

7. The personal token according to claim 1, **characterized in that** a data structure is stored in the token, where the set of instructions stores at least one information and that this information is later used for determining the next text section to be displayed to the user.
